# EUROPEAN PATENT APPLICATION

(11) **EP 1 942 395 A1**
(43) Date of publication of application: **09.07.2008**
(21) Application number: 08153338.2
(22) Date of filing: 10.03.2006
(51) Int. Cl.: G06F 1/16, G06F 3/048

(54) **Miniaturized keyboard**

(62) Divisional of application: 06110961.7
(71) Applicant: E-Lead Electronic Co., Ltd., Chang-Hua, Taiwan (CN)
(72) Inventor: Chen, Stephen, Chang-Hua (TW)
(74) Representative: Viering, Jentschura & Partner

(57) **Abstract**

A miniaturized keyboard clusters character input groups operable by one finger into an integrated single key. It has a keyboard base to hold a plurality of the integrated single keys. Each integrated single key has a touch sensitive pad and is divided into at least one segment. Each segment corresponds to a character. Thus the character input groups operable by one finger are clustered on one integrated single key. The integrated single key can generate different input characters depending on different finger positions. Hence the keyboard may be shrunk, and the number of keys and input error can be reduced.

## Description

### BACKGROUND OF THE INVENTION

### 1. Field of the Invention

The present invention relates to a miniaturized keyboard and particularly to a miniaturized keyboard that clusters character input groups operable by a finger to an integrated single key to shrink the size of the keyboard, reduce the number of keys and input errors.

### 2. Description of the Prior Art

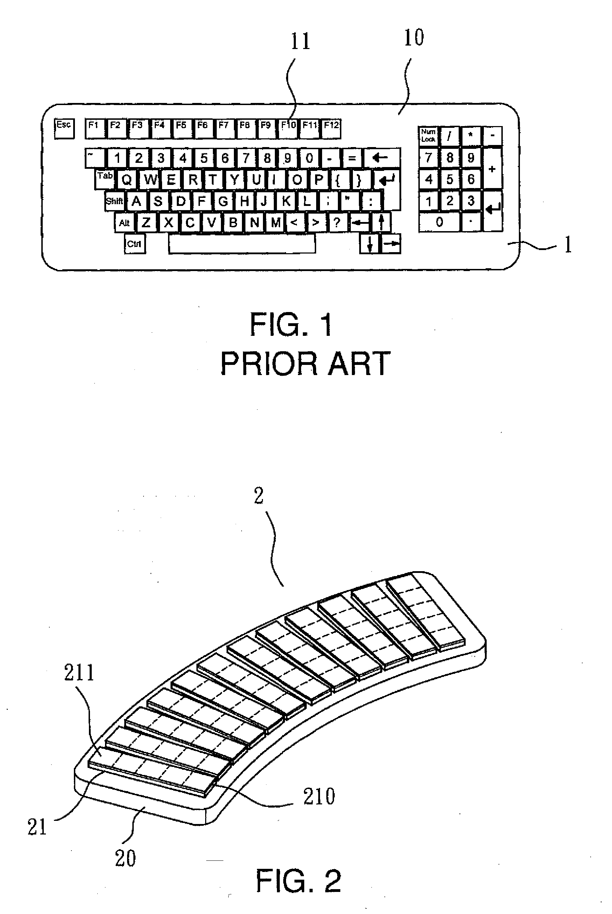

The conventional computer input interfaces generally include keyboards, mouse, voice input, handwriting recognition input and the like. Keyboards are most widely used. A conventional computer keyboard 1 (referring to FIG. 1) originates from typewriters. It mainly has a base 10 with a plurality of symbol button keys 11 located thereon. To mate finger size and prevent touching neighboring button keys during depressing operations, the button keys 11 of the computer keyboard 1 cannot be too small. With the computer becomes more powerful, the number of the button keys 11 of the computer keyboard 1 increases constantly to facilitate input operation.

As a result, the size of the computer keyboard also increases. These days some computer keyboards almost cover the entire usable area of a desktop. Hence many office desks are designed with two-level top surfaces. One level is dedicated for holding the computer keyboard. When in use, the desktop that holds the keyboard is pulled out. When there is a desire to process other paper documents, the desktop held the computer keyboard is pushed inwards beneath the upper desktop. Some office desktops are even made in L-shape with one side for processing paper documents and other side for holding the computer keyboard. All this wastes a lot of space. Moreover, as the operation area of the keyboard increases, user's two palms have to be suspended during typing to allow the fingers to cover all button keys to avoid mistakenly touching other button keys. Such a posture makes arms and fingers fatigued easily after operating a period of time. In addition, with the finger displacement increases, data entry speed decreases.

Furthermore, the conventional keyboard is made at a lager size to avoid mistakenly touching the neighboring button keys during data entry. When a button key is not depressed at the center, the finger sinks with the depressing button key and easily touches the neighboring button keys mistakenly. As the number of button keys is huge, aside from a few users who are skillful and well trained for typing, the general users have to look at the keyboard and screen alternately during typing to search or check the letters to be entered, and confirm correct data entry again. This operation requires user's neck moving back and forth. All this tends to increase fatigue on user's neck and eyes.

### SUMMARY OF THE INVENTION

In view of the aforesaid problems, it is an object of the present invention to provide a miniaturized keyboard that mainly has a plurality of integrated single keys on a keyboard base. Each integrated single key has a touch sensitive pad and is divided into one or more segment. Each segment corresponds to a character. Hence input character groups operable by one finger can be clustered to become the one integrated single key. A host can display one or more integrated single key character table on a screen. Therefore the number of the button keys decreases. And the size of the keyboard can be shrunk significantly. Input error also can be reduced.

In one aspect, when the integrated single key of the invention is in use and user's finger touches the touch sensitive pad but not yet depresses the key, the character to be depressed is detected and displayed on the screen. Hence the user can confirm the entering character without lowering the head to look at the keyboard to confirm the character to be entered. Therefore the user can concentrate his/her vision on the screen.

In another aspect, one or more of the integrated single key of the invention is designed in a bar type according to the moving track of the finger. And a plurality of the integrated single keys are arranged in a juxtaposed fashion on the keyboard base to facilitate user operation.

In yet another aspect, the surface of the integrated single key has a special positioning trace to enable the finger to position and identify quickly.

In still another aspect, the surface of the integrated single key has a jutting edge on one side to form a track to allow the finger to move steadily.

In yet another aspect, the surface of the integrated single key is formed in an arched fashion to avoid touching the fingernail and generating a mistaken operation. This is especially true when the touch sensitive pad is a condenser sensitive pad. As it is sensitive only to the skin of people but not sensitive to the fingernail, hence with the arched surface of the integrated single key, the finger can depress the character closer to the body easier, and the fingertip can touch the arched surface earlier than the fingernail does, thereby mistaken input operation can be reduced.

In yet another aspect, the keyboard base may consist of an independent left hand operation base and an independent right hand operation base. The left hand operation base and the right hand operation base may be separated or coupled together according to user's requirements when in use.

In yet another aspect, the miniaturized keyboard is a keyboard for notebook computers.

In yet another aspect, the miniaturized keyboard further includes a cursor control panel.

In yet another aspect, the miniaturized keyboard further includes a keyboard radio transceiver corresponding to a host radio transceiver connecting to a host to establish a wireless link.

In yet another aspect, the miniaturized keyboard may be connected to a host which contains a driving software to display an integrated single key character table on a screen corresponding to the miniaturized keyboard.

In yet another aspect, the integrated single key character table displayed on the screen corresponding to the integrated single key has a notable mark (such as color or inverse color) to indicate the character on the integrated single key touched by the finger.

In yet another aspect, the integrated single key character table displayed on the screen corresponding to the integrated single key is displayed when the finger touches the integrated single key on the miniaturized keyboard, and stops displaying when the finger moves away.

In yet another aspect, the integrated single key character table displayed on the screen corresponding to the integrated single key displays all letters and symbols in the condition of different languages, and indicates a special mark on the character touched by the finger.

The foregoing, as well as additional objects, features and advantages of the invention will be more readily apparent from the following detailed description, which proceeds with reference to the accompanying drawings.

### BRIEF DESCRIPTION OF THE DRAWINGS

FIG. 1 is a schematic view of a conventional computer keyboard.
FIG. 2 is a perspective view of the invention.
FIG. 3 is a block diagram of the invention connecting to a host.
FIG. 4 is an operation flowchart of the invention.
FIG. 5 is a schematic view of the invention connected to a host in an operating condition.
FIG. 6 is a schematic view of an embodiment of the integrated single key of the invention.
FIG. 7 is a schematic view of another embodiment of the integrated single key of the invention.
FIG. 8 is a schematic view of yet another embodiment of the integrated single key of the invention.
FIG. 9 is a schematic view of embodiment-1 of the invention.
FIG. 10 is a schematic view of embodiment-2 of the invention.
FIG. 11 is a schematic view of embodiment-3 of the invention.
FIG. 12 is a schematic view of embodiment-4 of the invention.
FIG. 13 is a schematic view of embodiment-5 of the invention.

### DESCRIPTION OF THE PREFERRED EMBODIMENTS

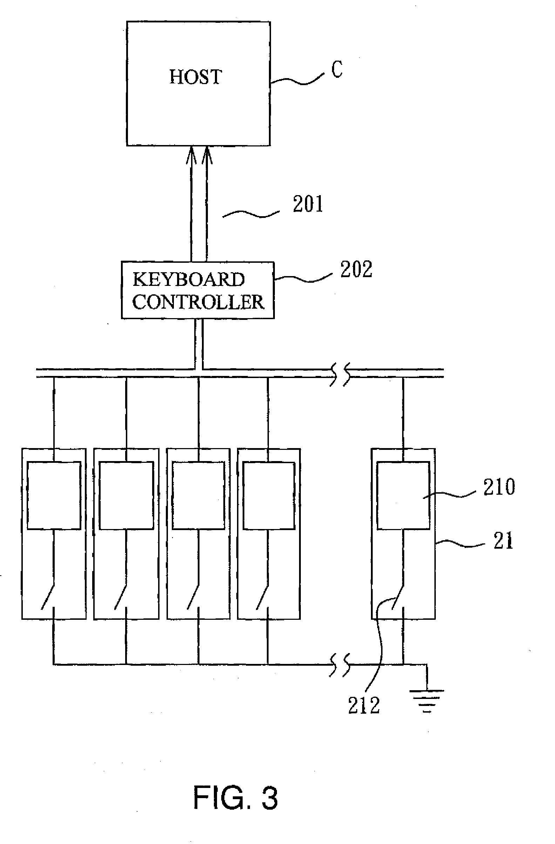

Referring to FIGS. 2 and 3, the miniaturized keyboard 2 according to the invention includes a plurality of integrated single keys 21 on a keyboard base 20. The miniaturized keyboard 2 is connected to a host C which contains a driving software.

The keyboard base 20 has a connection end 201 connecting to the host C, and a keyboard controller 202 to detect finger touching and depressing signals.

The integrated single key 21 clusters character input groups on the keyboard operable by one finger into one key, and has a touch sensitive pad 210, and is divided into a plurality of segments 211. Each segment 211 corresponds to a character. Thereby the character input groups operable by one finger is clustered into one integrated single key 21 and connected to the keyboard controller 202 of the keyboard base 20.

The integrated single key 21 further includes a key switch 212 which may be an induction key switch or a button key switch.

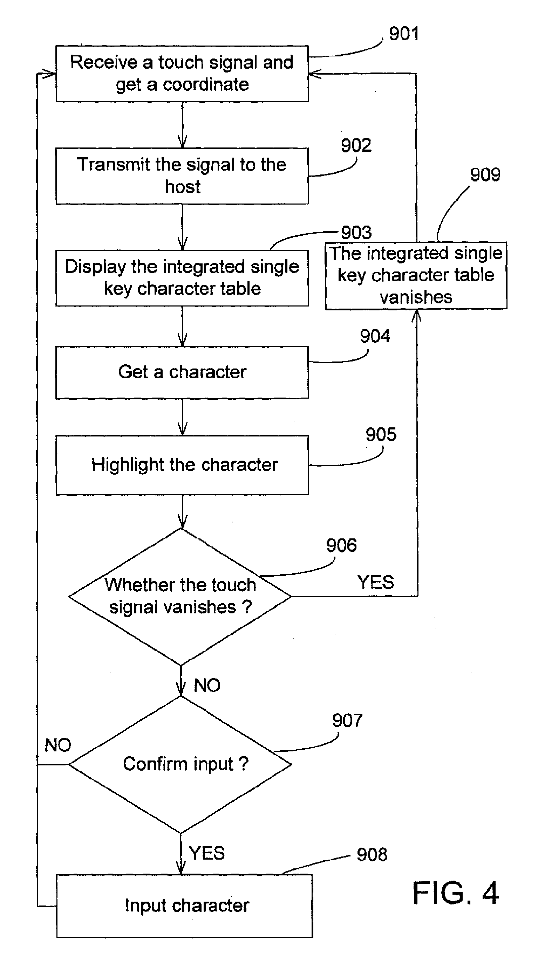

By means of the construction set forth above, the operation flow of the invention is as follow (referring to FIGS. 2 through 5):
1. Receive a touch signal and get coordinates (step 901): the touch sensitive pad 210 of the integrated single key 21 receives user's finger touch and generates a signal resulting from the touch of the finger, and gets a segment 211 where the finger touches;
2. Transmit the signal to the host (step 902): get the signal of the segment 211 where the finger touches, and transmit the signal to the keyboard controller 202 and the host C;
3. Display the integrated single key character table (step 903): an integrated single key character table A is displayed on a screen M;
4. Get a character (step 904): the keyboard controller 202 searches a character represented by the finger touched segment 211 according to the corresponding integrated single key character table A;
5. Highlight the character (step 905): on the integrated single key character table A displayed on the screen M, the character touched by the finger is shown by a special mark A 1 (such as a different color or inverse color) to inform the user;
6. Determine whether the signal vanishes (step 906): determine whether the finger touch signal vanishes from the touch sensitive pad 210 of the integrated single key 21; if positive, execute step 909; otherwise execute step 907;
7. Confirm input (step 907): detect whether the finger 5 has depressed the integrated single key 21; if positive, execute step 908; otherwise execute step 901;
8. Input character (step 908): the screen M displays input character on the input location, return to step 901; and
9. The integrated single key character table disappears (step 909): after a selected delay time, the integrated single key character table A vanishes from the screen M, return to step 901.

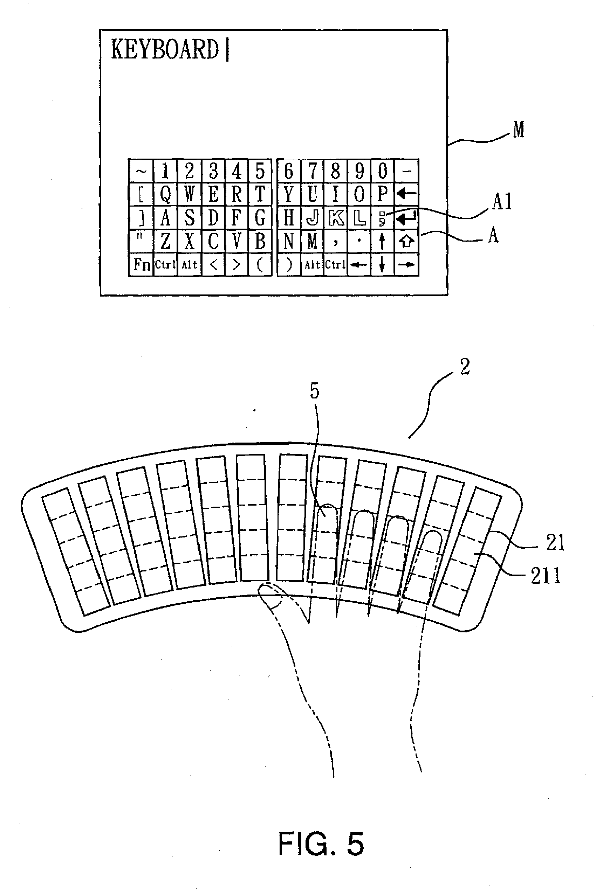

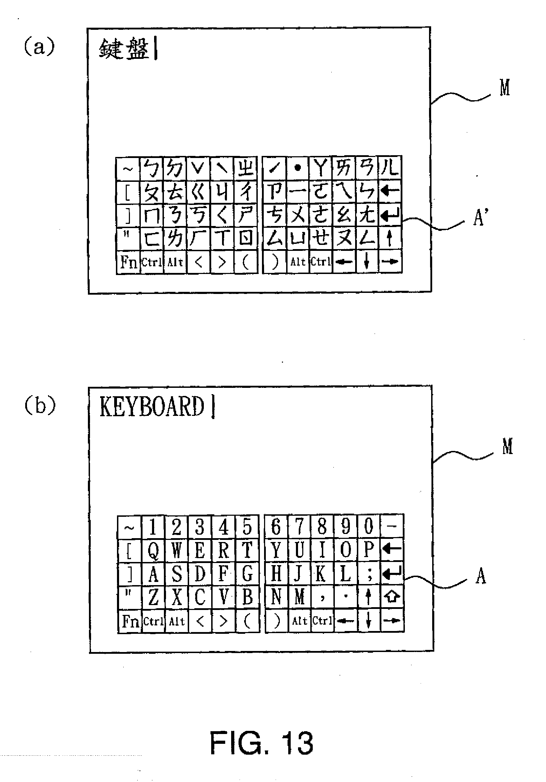

According to the miniaturized keyboard set forth above, the integrated single key character table A and A' on the screen M corresponding to the integrated single key 21 (referring to FIGS. 5 and 13) displays all letters and symbols as shown in FIG. 13 (a) and (b) in different language conditions. When a selected character is touched by the finger 5, a special mark Alis indicated (as shown in FIG. 5).

On the miniaturized keyboard set forth above, a plurality of the integrated single keys 21 (referring to FIG. 5) may be designed in a bar type according to the moving track of the finger. And a plurality of the integrated single keys 21 are arranged in a juxtaposed fashion on the keyboard base 20 to facilitate user operation.

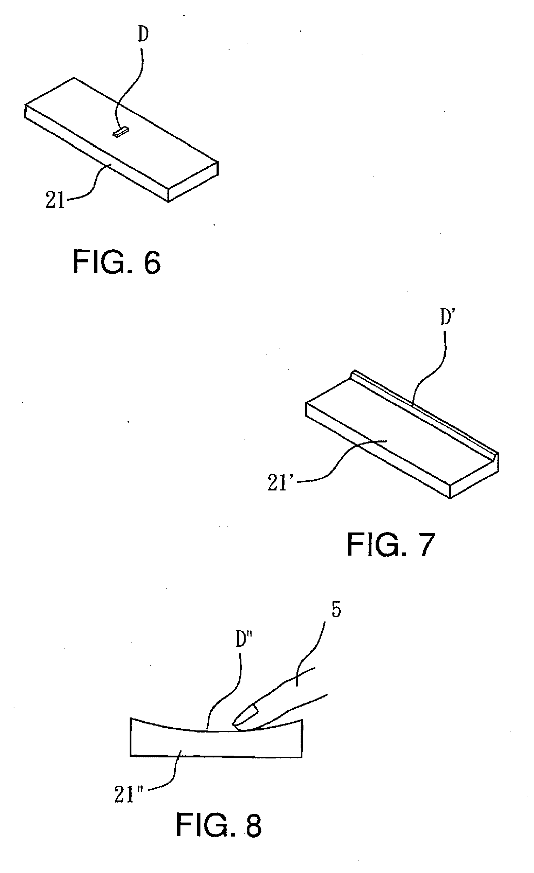

On the integrated single key 21 set forth above, the surface thereof has a special positioning trace D (as shown in FIG. 6) to enable the finger to position and identify quickly.

On the integrated single key 21' (as shown in FIG. 7) set forth above, the surface thereof has a jutting edge D' on one side to form a track to allow the finger to move steadily.

On the integrated single key 21" (as shown in FIG. 8) set forth above, the surface thereof is formed in an arched surface D" to avoid touching of the fingernail and generating a mistaken operation. This allows the fingertip to touch the integrated single key 21" earlier than the fingernail does during depressing operation to reduce mistaken operation.

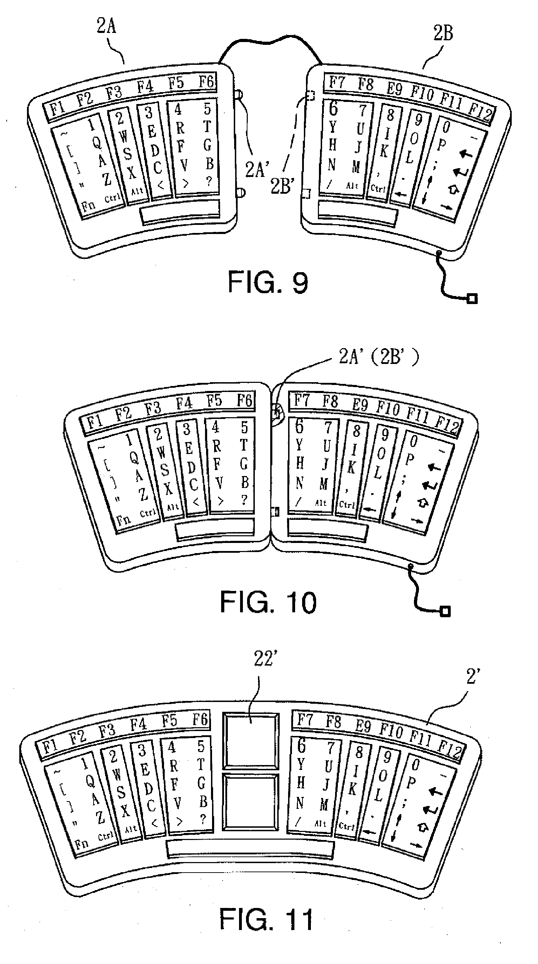

The miniaturized keyboard set forth above may further consist of an independent left hand operation base 2A and an independent right hand operation base 2B (referring to FIG. 9) to facilitate operation of both hands independently. The left hand operation base 2A and the right hand operation base 2B have respectively a coupling elements 2A' and 2B' to allow the left hand operation base 2A and the right hand operation base 2B to be separated or coupled together to form a keyboard base according to user's requirements when in use (referring to FIG. 10).

The miniaturized keyboard 2' (referring to FIG. 11) set forth above may further include a cursor control panel 22' to function as a mouse.

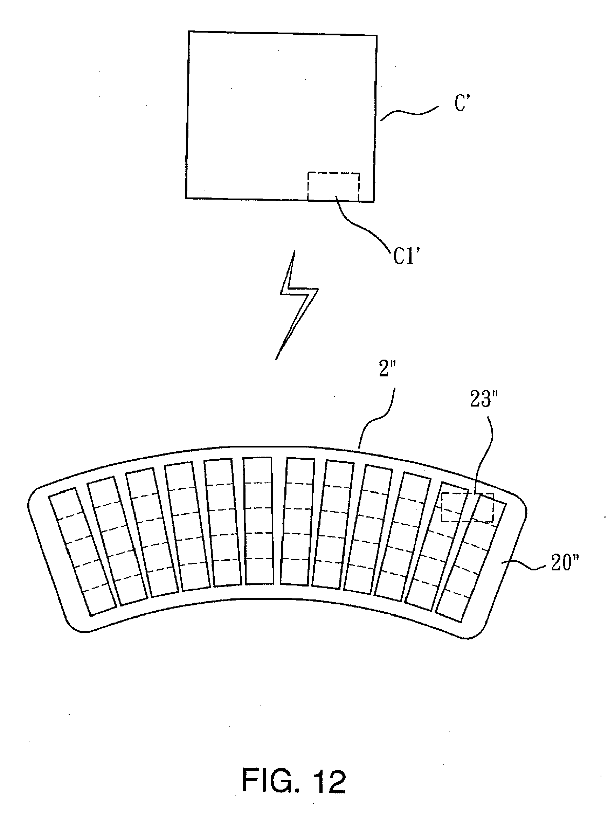

The miniaturized keyboard 2" (referring to FIG. 12) set forth above may further include a radio transceiver23" in the keyboard base 20" corresponding to a host radio transceiver C 1' connecting to a host C' to establish a wireless link.

In an embodiment of the invention, a miniaturized keyboard is provided. The miniaturized keyboard may include a plurality of integrated single keys on a keyboard base, each integrated single key having a touch sensitive pad and being divided into at least one segment, each segment corresponding to a character, each integrated single key clustering input character groups operable by a user's finger.

The integrated single key may be formed in a bar type according to a moving track of the finger, a plurality of the integrated single keys being arranged in a juxtaposed fashion on the keyboard base.

Furthermore, the integrated single key may have a surface which is formed with a special positioning trace to facilitate fast positioning and identifying of the finger.

In another embodiment of the invention, the integrated single key has a surface which is formed with a jutting edge on one side to facilitate steady operation of the finger.

In yet another embodiment of the invention, the integrated single key has an arched surface.

In an example, the miniaturized keyboard may further include a cursor control panel to function as a mouse.

Furthermore, the keyboard base may include a radio transceiver corresponding to a host radio transceiver connecting to a host to establish a wireless link.

The miniaturized keyboard may be used on a notebook computer.

In another example, each segment corresponds to a character and corresponds to at least one integrated single key character table displayed on a screen of a host.

In an embodiment of the invention, the miniaturized keyboard may further include an independent left hand operation base and an independent right hand operation base.

Furthermore, the left hand operation base and the right hand operation base may have respectively a coupling element to couple together to form the keyboard base.

### LEGEND FOR DRAWINGS:

### FIG. 3

C - Host, 202 - Keyboard controller

### FIG. 4

901 - Receive a touch signal and get a coordinate
902 - Transmit the signal to the host
903 - Display the integrated single key character table
904 - Get a character
905 - Highlight the character
906 - Whether the touch signal vanishes ?
907 - (No) Confirm input ?
908 - (Yes) Input character
909 - The integrated single key character table vanishes.

## Claims

1. A miniaturized keyboard comprising a plurality of integrated single keys on a keyboard base, each integrated single key having a touch sensitive pad and being divided into at least one segment, each segment corresponding to a character, each integrated single key clustering input character groups operable by a user's finger, wherein, when the integrated single key is in use and user's finger touches the touch sensitive pad but not yet depresses the key, the character to be depressed is detected and displayed on a screen, and when the user's finger has depressed the integrated single key, input of the character is confirmed.

2. The miniaturized keyboard of claim 1, wherein each integrated single key has a touch sensitive pad and is divided into one or more segments.

3. The miniaturized keyboard of claim 2, wherein the touch sensitive pad is a condenser sensitive pad.

4. The miniaturized keyboard of claim 1, wherein each integrated single key includes a key switch.

5. The miniaturized keyboard of claim 4, wherein the key switch is an induction key switch or a button key switch.

6. The miniaturized keyboard of claim 1, wherein the surface of the integrated single key has a special positioning trace to enable the finger to position and identify quickly.

7. A keyboard arrangement, comprising:
a miniaturized keyboard comprising a plurality of integrated single keys on a keyboard base, each integrated single key having a touch sensitive pad and being divided into at least one segment, each segment corresponding to a character, each integrated single key clustering input character groups operable by a user's finger, and
a host, the host comprising a driving software to display an integrated single key character table on a screen corresponding to the miniaturized keyboard,
wherein, when the integrated single key is in use and user's finger touches the touch sensitive pad but not yet depresses the key, the character to be depressed is detected and displayed on the screen,
and when the user's finger has depressed the integrated single key, input of the character is confirmed.

8. The keyboard arrangement of claim 7, wherein the integrated single key character table displayed on the screen corresponding to the integrated single key displays all letters and symbols in the condition of different languages, and indicates a special mark on the character touched by the finger.

9. The keyboard arrangement of claim 7, wherein the integrated single key character table displayed on the screen corresponding to the integrated single key is displayed when the finger touches the integrated single key on the miniaturized keyboard and stops displaying when the finger moves away.

10. The keyboard arrangement of claim 7, wherein the integrated single key character table displayed on the screen corresponding to the integrated single key has a notable mark to indicate the character on the integrated single key touched by the finger.

11. The keyboard arrangement of claim 10, wherein the notable mark is a color or an inverse color.
